# EUROPÄISCHE PATENTSCHRIFT

(11) **EP 1 307 864 B1**
(45) Veröffentlichungstag und Bekanntmachung des Hinweises auf die Patenterteilung: **04.04.2007**
(21) Anmeldenummer: 01956328.7
(22) Anmeldetag: 18.07.2001
(51) Int. Cl.: G07F 19/00

(54) **VERFAHREN ZUR BEZAHLUNG AN BELIEBIGEN VERKAUFS- BZW. DIENSTLEISTUNGSSTELLEN MIT MOBILTELEFON**
METHOD OF PAYMENT AT ANY SALES OR SERVICE ESTABLISHMENT BY MOBILE TELEPHONE
PROCEDE POUR LE PAIEMENT A L'AIDE D'UN TELEPHONE MOBILE DANS DES POINTS DE VENTE OU DE PRESTATION DE SERVICES QUELCONQUES

(30) Priorität: 09.08.2000 DE 10039569
(43) Veröffentlichungstag der Anmeldung: 07.05.2003
(73) Patentinhaber: Vodafone Holding GmbH, 40213 Düsseldorf (DE)
(72) Erfinder: JOUSSEN, Friedrich, 47057 Duisburg (DE); WIERZBITZKI, Dirk, 40885 Ratingen (DE); PAPEN, Wolfgang, 41564 Kaarst (DE)
(74) Vertreter: Meissner, Peter E.
(86) Internationale Anmeldenummer: PCT/DE2001/002678
(87) Internationale Veröffentlichungsnummer: WO 2002/013154

(56) Entgegenhaltungen:
- EP-A- 0 875 871
- WO-A-95/19593
- WO-A-99/22346
- WO-A-99/33034
- US-A- 5 883 810

## Beschreibung

Die Erfindung betrifft ein Verfahren zur Bezahlung mittels Mobiltelefon von Waren oder Dienstleistungen an beliebigen Verkaufsstellen sowohl im Internet als auch in der realen Welt.

Es wurde bereits ein ähnliches System zur Durchführung und Abrechnung eines über das Internet initiierten Kaufes bei einem Verkäufer von Produkten oder Dienstleistungen vorgeschlagen (DE-Patentanmeldung 199 38 201.8). Dieses System eignet sich für eine von einem Käufer mit einem Mobilfunkendgerät über das Internet initiierte Kaufanfrage; es kann jedoch auch für die Authentisierung, Bonitätsprüfung und Abwicklung von Käufen verwendet werden, welche von einem Käufer mit einem Computer über das Festnetz (z. B. über die Homepage des Verkäufers) initiiert wurden, in welchem Falle lediglich die Identitätsüberprüfung durch Transaktionsnummer und Mobilfunkteilnehmer-Identität (insbesondere MSISDN) über ein Mobilfunkendgerät dieses Käufers erfolgt. Die finanzielle Abrechnung kann über die Fernmelderechnung (Mobilfunkgebührenrechnung) des Käufers erfolgen. Sie kann alternativ auch dadurch erfolgen, daß von einem Bankkonto des Käufers ein Betrag abgebucht und dieser Betrag auf ein Bankkonto des Verkäufers aufgebucht wird.

Dieses System besitzt den Nachteil, daß der Käufer seine die Mobilfunkteilnehmer-Identität repräsentierenden Mobilfunkteilnehmer-Identitätsdaten an den Verkäufer übermittelt, die dann vom Verkäufer an eine zentrale Abwicklungsstelle weiter übermittelt werden. Durch die Weitergabe von Stammdaten (z. B. Telefonnummer) kann keine Anonymität des Käufers erreicht werden.
Außerdem ist das System auf die Bezahlung im Internet beschränkt und es ist keine ausreichende Sicherheit gegeben, da die Bestätigung einer Zahlungstransaktion nicht durch eine PIN geschützt ist. Des Weiteren ist die Weitergabe einer vielstelligen Telefonnummer (allein in Deutschland ist zur eindeutigen Identifizierung eines Teilnehmers mindestens eine 10-stellige Ziffer erforderlich) relativ unpraktikabel.

In der Schrift EP 0 669 031 B1 ist ein Verfahren zum Durchführen finanzieller Transaktionen über ein Mobiltelefonsystem beschrieben, bei dem der Benutzer des Systems vor der Verbindung zu einem Dienstleister über ein eigenständiges Netz in einem Autorisierungszentrum des Mobiltelefonsystems mittels eines persönlichen ldentitätscodes sowie Daten von einem intelligenten Teil einer Dienstkarte in der Endeinrichtung autorisiert wird.

Die Schrift US 5,724,423 offenbart ein Verfahren, bei dem der Benutzer einer Dienstleistung mit einer Personen-Identifikationsnummer einen Code generiert, der ihn nach Übertragung des Codes als autorisiert zur Inanspruchnahme der Dienstleistung ausweist.

Der Erfindung lag die Aufgabe zugrunde, ein Verfahren zur bedienungsfreundlichen und sicheren Abwicklung eines Zahlungsvorgangs über ein Mobiltelefon zu schaffen, bei dem die Zahlung sowohl im Internet als auch an realen Verkaufsstellen, also an Automaten oder Kassenterminals erfolgen kann.

Das Verfahren soll bei Minimierung des Betrugs- bzw. Mißbrauchsrisikos einfach sein und vor allem die Anonymität des Kunden gegenüber dem Waren-/Dienstleistungsanbieter sichern.

Die Lösung der Aufgabe erfolgt entsprechend den Merkmalen eines der Patentansprüche 1 oder 2. Die Unteransprüche geben zweckmäßige Ausgestaltungen der Merkmale der Ansprüche 1 und 2 wieder.

Weitere Merkmale der Lösung sind in zwei Ausführungsbeispielen angegeben, die anhand der Zeichnungen erläutert werden.

In den Zeichnung zeigen:
Fig. 1: ein Ablaufschema gemäß dem Verfahren nach Patentanspruch 1
Fig. 2: ein Ablaufschema gemäß dem Verfahren nach Patentanspruch 2

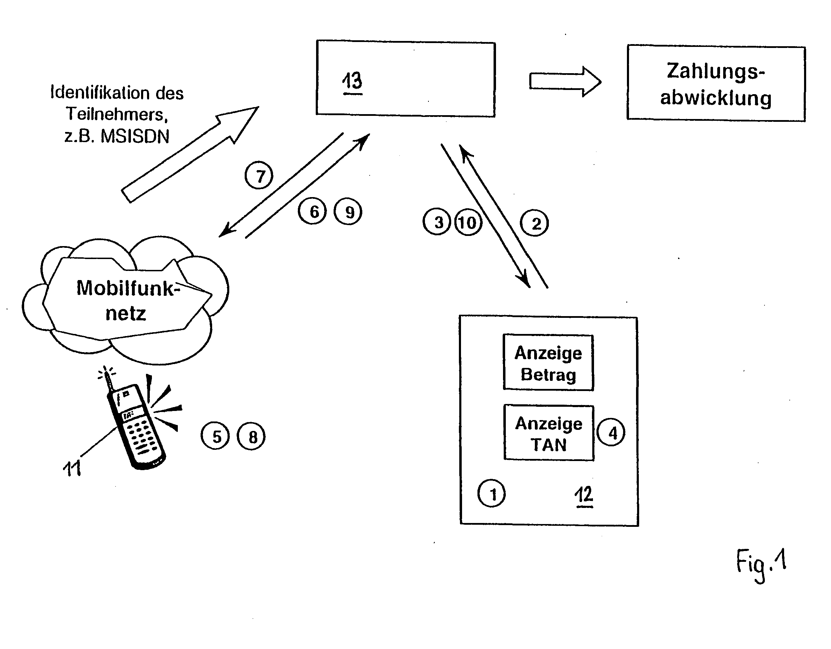

Der Kunde initiiert 1 über Knopfdruck an der Verkaufsstelle 12 einen Zahlungswunsch (Fig. 1).
Daraufhin übermittelt die Verkaufsstelle 12 über Festnetz oder Mobilfunknetz 2 die zahlungsrelevanten Daten (Betrag, Händler-ID, Verkaufsstellen-ID, ggf. Warenkorb) an eine zentrale TAN-Vergabestelle 13.
Die TAN-Vergabestelle 13 generiert und übermittelt 3 eine eindeutige TAN an die Verkaufsstelle 12, die dort angezeigt wird 4 und für eine begrenzte Zeitdauer, bspw. eine Minute, Gültigkeit besitzt.
Der Kunde gibt innerhalb dieser Zeitdauer die TAN am Handy 11 auf geeignete Art und Weise, bspw. über ein SIM-Toolkit- oder ein WAP-Menü "Payment" ein 5 und übermittelt 6 diese über das Mobilfunknetz an die TAN-Vergabestelle 13.
Seine Identifikation gegenüber der TAN-Vergabestelle 13 erfolgt durch seine MSISDN oder eine andere Mobilfunknetz-inteme Kennung.
In der TAN-Vergabestelle 13 erfolgt die Zuordnung der TAN zum jeweiligen Zahlungsvorgang, d. h. zu den zahlungsrelevanten Daten und zur Identität des Kunden sowie eine Rückbestätigung 7 der zahlungsrelevanten Daten zum Handy 11.
Wenn alles in Ordnung ist, bestätigt 8 der Kunde durch PIN-Eingabe den Zahlungsvorgang am Handy 11 und sendet 9 die Bestätigung zur TAN-Vergabestelle 13. Diese wiederum veranlasst die Zahlungsabwicklung und bestätigt 10 die erfolgreiche Transaktion an die Verkaufsstelle 12.

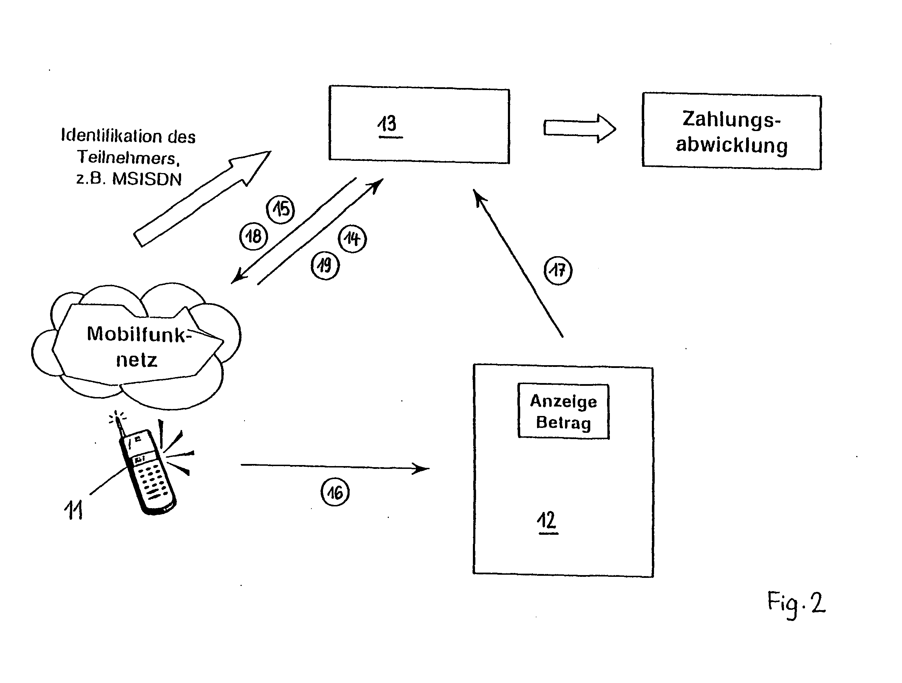

Fig. 2 zeigt den Ablauf des Verfahrens nach Anspruch 2.
Der Kunde initiiert 14 über das Handy 11, bspw. durch Anwahl einer festen Nummer oder durch den Versand einer Kurzmitteilung den Zahlungswunsch bei der zentralen TAN-Vergabestelle 13 und identifiziert sich durch seine MSISDN oder eine netzbetreibereigene Kennung.
Die TAN-Vergabestelle generiert und übermittelt 15 eine eindeutige TAN, die für eine begrenzte Zeitdauer, bspw. eine Minute Gültigkeit hat an das Handy 11.
Vom Handy 11 wird die TAN mittels IrDA oder Bluetooth an den POS der Verkaufsstelle 12 übermittelt 16.
Sodann werden die zahlungsrelevanten Daten (Betrag, Händler-ID, Verkaufsstellen-ID, ggf. Warenkorb) zusammen mit der TAN über Festnetz oder Mobilfunknetz von der Verkaufsstelle 12 an die TAN-Vergabestelle 13 übermittelt 17.
Nach der Rückbestätigung 18 der zahlungsrelevanten Daten an das Handy 11 bestätigt der Kunde durch JA-Eingabe bzw. Eingabe einer PIN am Handy 11 den Zahlungsvorgang und sendet 19 die Bestätigung an die TAN-Vergabestelle, worauf diese die Zahlungsabwicklung veranlaßt.

Mit den erfindungsgemäßen Verfahren erfolgt eine bedienungsfreundliche und sichere Abwicklung des Zahlungsvorgangs, ohne daß die Anonymität des Kunden aufgegeben wird. sowie Daten von einem intelligenten Teil einer Dienstkarte in der Endeinrichtung autorisiert wird.

## Patentansprüche

1. Verfahren zur Bezahlung an beliebigen Verkaufs- bzw. Dienstleistungsstellen mit Mobiltelefon mittels einer dem Kunden zugeordneten Transaktionsnummer (TAN),
**dadurch gekennzeichnet,**
**daß** der Kunde am Point-of Sale (POS) oder Automaten der Verkaufs- bzw. Dienstleistungsstelle (12) einen Zahlungswunsch initiiert (1),
**daß** die Verkaufs- bzw. Dienstleistungsstelle (12) die zahlungsrelevanten Daten, wie Betrag und Händler-ID, an eine zentrale TAN-Vergabestelle (13) übermittelt (2),
**daß** von der zentralen TAN-Vergabestelle (13) eine TAN generiert und an die Verkaufs- bzw. Dienstleistungsstelle (12) übermittelt wird (3), wobei die TAN für eine bestimmte Zeitspanne Gültigkeit besitzt,
**daß** die TAN an der Verkaufs- bzw. Dienstleistungsstelle angezeigt wird (4),
**daß** der Kunde innerhalb der Gültigkeitsdauer der TAN diese am Mobiltelefon (11) eingibt (5) und an die TAN-Vergabestelle (13) übermittelt (6), wobei er sich gegenüber der TAN-Vergabestelle identifiziert
**daß** eine Rückbestätigung der zahlungsrelevanten Daten an den Kunden erfolgt (7),
**daß** der Kunde den Zahlungsvorgang über das Mobiltelefon (11) bestätigt (8,9), wonach von der TAN-Vergabestelle (13) die Zahlungsabwicklung veranlaßt wird.

2. Verfahren zur Bezahlung an beliebigen Verkaufs- bzw. Dienstleistungsstellen mit Mobiltelefon mittels einer dem Kunden zugeordneten Transaktionsnummer (TAN),
**dadurch gekennzeichnet,**
**daß** der Kunde bei einer zentralen TAN-Vergabestelle (13) über Mobiltelefon (11) durch Anwahl einer festen Nummer oder SMS einen Zahlungswunsch initiiert (14), wobei er sich gegenüber der TAN-Vergabestelle (13) identifiziert,
**daß** von der zentralen TAN-Vergabestelle eine TAN generiert und an den Kunden übermittelt wird (15), wobei die TAN für eine bestimmte Zeitspanne Gültigkeit besitzt,
**daß** die TAN vom Kunden an die Verkaufs- bzw. Dienstleistungsstelle (12) übermittelt wird (16),
**daß** die zahlungsrelevanten Daten, wie Betrag und Händler-ID, einschließlich der TAN von der Verkaufs- bzw. Dienstleistungsstelle (12) an die TAN-Vergabestelle (13) übermittelt werden (17),
**daß** eine Rückbestätigung der zahlungsrelevanten Daten an den Kunden erfolgt (18) und daß der Kunde den Zahlungsvorgang bestätigt (19), wonach von der TAN-Vergabestelle die Zahlungsabwicklung veranlaßt wird.

3. Verfahren nach Anspruch 1,
**dadurch gekennzeichnet,**
**daß** die initiierung des Zahlungswunsches am POS/Automaten durch Knopfdruck oder Einschieben eines Tickets erfolgt.

4. Verfahren nach Anspruch 1 oder 2,
**dadurch gekennzeichnet,**
**daß** sich der Kunde gegenüber der TAN-Vergabestelle durch MSISDN identifiziert.

5. Verfahren nach Anspruch 1 oder 2,
**dadurch gekennzeichnet,**
**daß** sich der Kunde gegenüber der TAN-Vergabestelle durch eine netzbetreibereigene Kennung identifiziert.

6. Verfahren nach Anspruch 1 oder 2,
**dadurch gekennzeichnet,**
**daß** die TAN eine Gültigkeitsdauer von 1 Minute besitzt.

7. Verfahren nach Anspruch 2,
**dadurch gekennzeichnet,**
**daß** die Übermittlung der TAN vom Mobiltelefon (11) an die Verkaufs- bzw. Dienstleistungsstelle (12) mittels lrDA/Bluetooth erfolgt.

8. Verfahren nach Anspruch 1 oder 2,
**dadurch gekennzeichnet,**
**daß** die Übermittlung der zahlungsrelevanten Daten von der Verkaufs- bzw. Dienstleistungsstelle (12) an die TAN-Vergabestelle (13) über drahtgebundene Verfahren erfolgt.

9. Verfahren nach Anspruch 1 oder 2,
**dadurch gekennzeichnet,**
**daß** die Übermittlung der zahlungsrelevanten Daten von der Verkaufs- bzw. Dienstleistungsstelle (12) an die TAN-Vergabestelle (13) über drahtlose Verfahren erfolgt.

10. Verfahren nach Anspruch 1 oder 2,
**dadurch gekennzeichnet,**
**daß** die Übermittlung der zahlungsrelevanten Daten von der Verkaufs- bzw. Dienstleistungsstelle (12) an die TAN-Vergabestelle (13) über den Weg POS- Mobiltelefon-Mobilfunknetz- TAN-Vergabestelle erfolgt.

11. Verfahren nach einem der vorhergehenden Ansprüche,
**dadurch gekennzeichnet,**
**daß** die TAN vierstellig ist.

12. Verfahren nach Anspruch 1 oder 2,
**dadurch gekennzeichnet,**
**daß** die Bestätigung des Zahlungsvorgangs durch den Kunden durch PIN erfolgt.

13. Verfahren nach Anspruch 1 oder 2,
**dadurch gekennzeichnet,**
**daß** die Bestätigung des Zahlungsvorgangs durch den Kunden durch JA/NEIN erfolgt.

14. Verfahren nach Anspruch 1,
**dadurch gekennzeichnet,**
**daß** die Eingabe der TAN am Mobiltelefon in einem STK/WAP-Menü "Payment" erfolgt.

15. Verfahren nach Anspruch 1,
**dadurch gekennzeichnet,**
**daß** die Eingabe der TAN am Mobiltelefon per Sprache erfolgt.

16. Verfahren nach Anspruch 1,
**dadurch gekennzeichnet,**
**daß** die Übermittlung der TAN an die TAN-Vergabestelle (13) durch SMS, WAP oder Sprache/VRU erfolgt.

## Claims

1. Method of payment at any sale or service points with a mobile telephone by means of a transaction number (TAN) allocated to the customer, **characterised in that** the customer initiates (1) a payment wish at the point of sale (POS) or vending machine of the sale or service point (12), **in that** the sale or service point (12) transmits (2) the payment-relevant data, such as the amount and retailer ID to a central TAN order-placing point (13), **in that** from the central TAN order-placing point (13) a TAN is generated and transmitted (3) to the sale or service point (12), the TAN being valid for a specified time-span, **in that** the TAN is displayed (4) at the sale or service point, **in that** the customer inputs (5) the TAN on the mobile telephone (11) within the duration of validity of the TAN and transmits (6) the same to the TAN order-placing point (13), in which case he/she identifies himself/herself with respect to the TAN order-placing point, **in that** a return confirmation of the payment-relevant data is made (7) to the customer, and **in that** the customer confirms (8, 9) the payment process via the mobile telephone (11), whereupon the TAN order-placing point (13) prompts execution of the payment.

2. Method of payment at any sale or service points with a mobile telephone by means of a transaction number (TAN) allocated to the customer, **characterised in that** the customer initiates (14) a payment wish at a central TAN order-placing point (13) via mobile telephone (11) by dialling a landline number or SMS, in which case he/she identifies himself/herself with respect to the TAN order-placing point (13), **in that** the central TAN order-placing point (13) generates a TAN and transmits (15) the same to the customer, the TAN being valid for a specified time-span, **in that** the TAN is transmitted (16) by the customer to the sale or service point (12), **in that** the payment-relevant data, such as amount and retailer ID, including the TAN of the sale or service point (12) are transmitted (17) to the TAN order-placing point (13), **in that** a return confirmation of the payment-relevant data is made (18) to the customer and **in that** the customer confirms (19) the payment process, whereupon the payment execution is prompted by the TAN order-placing point.

3. Method according to claim 1, **characterised in that** the initiation of the payment wish at the POS/vending machine is effected by pressing a button or inserting a ticket.

4. Method according to claim 1 or 2, **characterised in that** the customer identifies himself with respect to the TAN order-placing point by MSISDN.

5. Method according to claim 1 or 2, **characterised in that** the customer identifies himself with respect to the TAN order-placing point by a code unique to the network operator.

6. Method according to claim 1 or 2, **characterised in that** the TAN has a duration of validity of 1 minute.

7. Method according to claim 2, **characterised in that** the transmission of the TAN from the mobile telephone (11) to the sale or service point (12) is effected by means of IrDA/Bluetooth.

8. Method according to claim 1 or 2, **characterised in that** the transmission of the payment-relevant data from the sale or service point (12) to the TAN order-placing point (13) is effected via wired processes.

9. Method according to claim 1 or 2, **characterised in that** the transmission of the payment-relevant data from the sale or service point (12) to the TAN order-placing point (13) is effected via wireless processes.

10. Method according to claim 1 or 2, **characterised in that** the transmission of the payment-relevant data from the sale or service point (12) to the TAN order-placing point (13) is effected via the POS-mobile telephone network TAN order-placing point.

11. Method according to one of the preceding claims, **characterised in that** the TAN has four digits.

12. Method according to claim 1 or 2, **characterised in that** confirmation of the payment process is effected by the customer using his PIN.

13. Method according to claim 1 or 2, **characterised in that** confirmation of the payment process is effected by the customer stating YES/NO.

14. Method according to claim 1, **characterised in that** the input of the TAN is effected on the mobile telephone in a "Payment" STK/WAP menu.

15. Method according to claim 1, **characterised in that** the input of the TAN is effected on the mobile telephone by speech.

16. Method according to claim 1, **characterised in that** the transmission of the TAN to the TAN order-placing point (13) is effected by SMS, WAP or speech/VRU.

## Revendications

1. Procédé destiné au paiement dans des points de vente ou de prestations de services quelconques par téléphone mobile au moyen d'un numéro de transaction (TAN) attribué au client,
**caractérisé en ce que** le client initie (1) un souhait de paiement sur le terminal de point de vente (POS) ou sur le distributeur du point de vente ou de prestations de services (12),
**en ce que** le point de vente ou de prestations de services (12) communique les données relatives au paiement, telles que le montant et l'identifiant du commerçant, à un centre d'attribution de TAN (13),
**en ce que** le centre d'attribution de TAN (13) génère un TAN et le transmet (3) au point de vente ou de prestations de services (12), le TAN possédant une validité pour un laps de temps donné,
**en ce que** le TAN est affiché (4) sur le point de vente ou de prestations de services,
**en ce que** le client, avant la fin du temps de validité du TAN, entre (5) celui-ci sur le téléphone mobile (11) et le transmet (6) au centre d'attribution de TAN (13), le client s'identifiant vis-à-vis du centre d'attribution de TAN,
**en ce qu'**une confirmation en retour des données relatives au paiement a lieu (7) auprès du client,
**en ce que** le client confirme (8, 9) l'opération de paiement par le biais du téléphone mobile (11), après quoi le centre d'attribution de TAN (13) ordonne le traitement du paiement.

2. Procédé destiné au paiement dans des points de vente ou de prestations de services quelconques par téléphone mobile au moyen d'un numéro de transaction (TAN) attribué au client,
**caractérisé en ce que** le client initie (14) un souhait de paiement auprès d'un centre d'attribution de TAN (13) par téléphone mobile (11) par la- sélection d'un numéro fixe ou par SMS, le client s'identifiant vis-à-vis du centre d'attribution de TAN (13),
**en ce que** le centre d'attribution de TAN génère un TAN et le transmet (15) au client, le TAN possédant une validité pour un laps de temps donné,
**en ce que** le TAN est transmis (16) par le client au point de vente ou de prestations de services (12),
**en ce que** les données relatives au paiement, telles que le montant et l'identifiant du commerçant, y compris le TAN, sont transmises (17) par le point de vente ou de prestations de services (12) au centre d'attribution de TAN (13),
**en ce qu'**une confirmation en retour des données relatives au paiement a lieu (18) auprès du client et
**en ce que** le client confirme (19) l'opération de paiement, après quoi le centre d'attribution de TAN ordonne le traitement du paiement.

3. Procédé selon la revendication 1,
**caractérisé en ce que** l'initiation du souhait de paiement sur le terminal POS ou le distributeur a lieu par pression de bouton ou insertion d'un ticket.

4. Procédé selon la revendication 1 ou 2,
**caractérisé en ce que** le client s'identifie par MSISDN vis-à-vis du centre d'attribution de TAN.

5. Procédé selon la revendication 1 ou 2,
**caractérisé en ce que** le client s'identifie par un identifiant propre à l'exploitant du réseau vis-à-vis du centre d'attribution de TAN.

6. Procédé selon la revendication 1 ou 2,
**caractérisé en ce que** le TAN possède un temps de validité d'une minute.

7. Procédé selon la revendication 2,
**caractérisé en ce que** la transmission du TAN du téléphone mobile (11) au point de vente ou de prestations de services (12) a lieu par IrDA ou Bluetooth.

8. Procédé selon la revendication 1 ou 2,
**caractérisé en ce que** la transmission des données relatives au paiement du point de vente ou de prestations de services (12) au centre d'attribution de TAN (13) a lieu par le biais de procédés sur fil.

9. Procédé selon la revendication 1 ou 2,
**caractérisé en ce que** la transmission des données relatives au paiement du point de vente ou de prestations de services (12) au centre d'attribution de TAN (13) a lieu par le biais de procédés sans fil.

10. Procédé selon la revendication 1 ou 2,
**caractérisé en ce que** la transmission des données relatives au paiement du point de vente ou de prestations de services (12) au centre d'attribution de TAN (13) a lieu par le chemin terminal POS - téléphone mobile - réseau de téléphone mobile - centre d'attribution de TAN.

11. Procédé selon l'une des revendications précédentes,
**caractérisé en ce que** le TAN comporte quatre chiffres.

12. Procédé selon la revendication 1 ou 2,
**caractérisé en ce que** la confirmation de l'opération de paiement est effectuée par PIN par le client.

13. Procédé selon la revendication 1 ou 2,
**caractérisé en ce que** la confirmation de l'opération de paiement est effectuée par OUI/NON par le client.

14. Procédé selon la revendication 1,
**caractérisé en ce que** la saisie du TAN sur le téléphone mobile a lieu dans un menu STK/WAP « Payment ».

15. Procédé selon la revendication 1,
**caractérisé en ce que** l'entrée du TAN sur le téléphone mobile a lieu par la parole.

16. Procédé selon la revendication 1,
**caractérisé en ce que** la transmission du TAN au centre d'attribution de TAN (13) a lieu par SMS, WAP ou parole/VRU.
